# EUROPEAN PATENT APPLICATION

(11) **EP 4 475 365 A1**
(43) Date of publication of application: **11.12.2024**
(21) Application number: 23305886.6
(22) Date of filing: 05.06.2023
(51) Int. Cl.: H02G 3/32, B60R 16/02, F16L 3/10, F16L 3/22

(54) **A CABLE CLAMPING DEVICE FOR CLAMPING CABLES, FOR INSTANCE FOR ELECTRICAL CABLES OF AN ELECTRICAL MOTOR, IN PARTICULAR IN A RAILWAY VEHICLE**

(71) Applicant: ALSTOM Holdings, 93400 Saint-Ouen-sur-Seine (FR)
(72) Inventor: BROCARD, Laurent, 25290 SCEY-MAISIERES (FR); PAULIN, Herve, 25290 ORNANS (FR)
(74) Representative: Lavoix

(57) **Abstract**

The cable clamping device (10) comprises first (14) and a second (16) parts comprising first openings (26) and second openings (28) respectively, and fixation members (30) passing through the openings. The parts (14, 16) delimit together passages for cables (12), the passages extending along an axis (X). The parts (14, 16) comprise complementary inclined contact surface (22, 24), inclined with respect to the axis (X). At least one of the first (26) and second (28) openings is oblong, so that the first (14) and second (16) parts can be assembled in several different positions while the first (22) and second (24) inclined contact surfaces are on contact with each other.

## Description

The invention relates to a cable clamping device for clamping cables, for instance for electrical cables of an electrical motor, in particular in a railway vehicle.

Such a cable clamping device is generally intended to hold electrical cables near the motor terminal box of an electrical motor. This prevents the dynamic forces exerted by the cables from being applied directly to the cable glands.

A cable clamping device is already known in prior art, comprising two parts fastened together while clamping the cables between these two parts. The first part comprises at least a first groove, and the second part comprises at least a second groove, the first and second groove forming together a passage for a respective cable.

It should be noticed that when the diameter of the cable is superior to the size of the passage, there is a gap between the two parts. Because of this gap, a break may occur in one of the parts when screwing one part on the another. Thus, the control of the tightening of the screwed assembly becomes difficult with the range of tolerance of the cable diameters and the appearance of the extra flexible cables.

Therefore, a specific cable clamping device must be designed for each cable reference used.

The invention is intended to solve this problem by proposing a cable clamping device adaptable to several cable diameters.

To this end, the invention relates to a cable clamping device for clamping cables, for instance for electrical cables of an electrical motor, in particular in a railway vehicle, comprising a first part and a second part intended to be assembled together while clamping the cables between them, wherein:
- the first part comprises at least one first opening and the second part comprising at least one second opening, the cable clamping device comprising at least one fixation member, each fixation member passing through a respective first opening and a respective second opening,
- the first part comprises at least a first groove, and the second part comprises at least a second groove, the first and second grooves forming together a passage for a respective cable, the passage extending along an axis,
characterized in that:
- the first part comprises a first inclined contact surface, inclined with respect to the axis, and the second part comprises a second inclined contact surface, inclined with respect to the axis, and complementary with the first inclined contact surface,
- at least one of the first and second openings is oblong, so that the first and second arts can be assembled in several different positions while the first nd second inclined contact surfaces are on contact with each other.

Because of the inclined surfaces and the oblong opening, the parts can be assembled in different relatives positions with different distance between the first and second grooves. Thus, the distance between the grooves can be adapted to the cable diameter.

As a result, the cable clamping device of the invention can be used with several cable diameters.

The cable clamping device of the invention can comprise one of several of the following features, taken alone or with any possible combination.
- Each fixation member is a screw.
- A support metal sheet is inserted between a head of the fixation member and the first part, forming a solid support for this head.
- Each of the first openings is oblong.
- The first part comprises lateral recesses for receiving lateral edges of the second part.
- The first part comprises holding members for holding subsidiary cables like cables for measure devices or for any subsidiary device.

The invention also relates to a method of assembling a cable clamping device as specified above, comprising:
- disposing cables in the second grooves,
- accosting the first part with the second part,
- sliding the first part along the second part, until the first grooves meet the cables.

The invention also relates to an electric motor, in particular for a railway vehicle, comprising a casing and cables, characterized in that it comprises the cable clamping device as specified above, fastened on the casing.

Various aspects and advantages of the invention will be highlighted in the following description, which is given only as an example and is made with reference to the attached figures, among which:

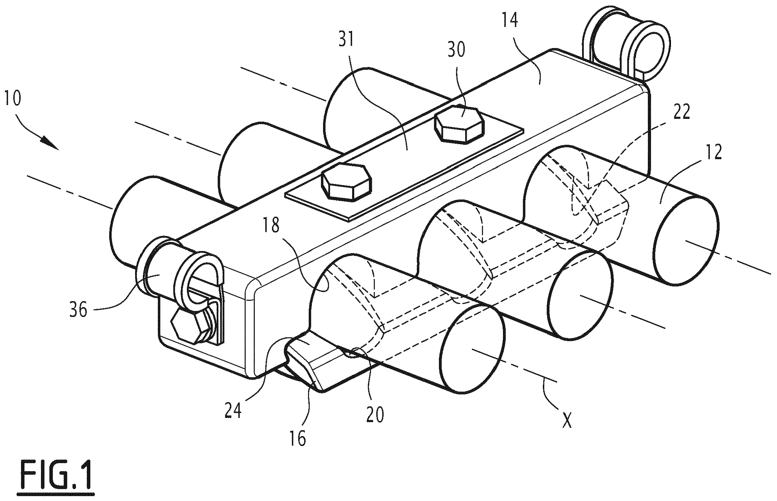

- Figure 1 is a perspective view of a cable clamping device according to an example of embodiment,

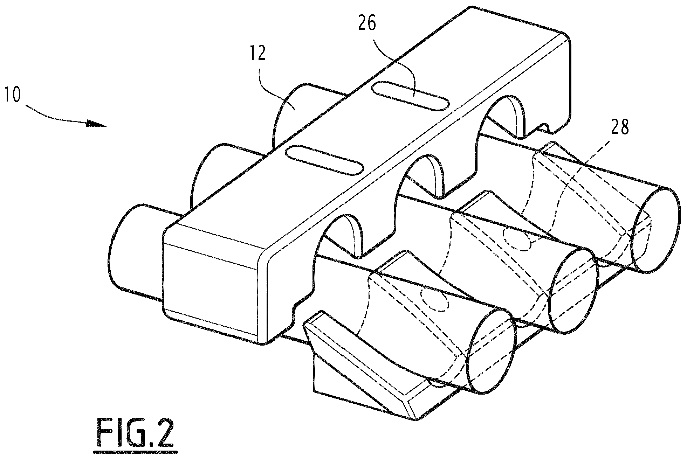

- Figure 2 is a perspective view of the cable clamping device of figure 1, before assembling the two parts of this cable clamping device,
- Figure 3 is a perspective view from behind of the cable clamping device of figure 1.

A cable clamping device 10 according to an example of embodiment of the invention is shown on figures.

The cable clamping device 10 is intended to clamp cables 12, for instance for electrical cables of an electrical motor, in particular in a railway vehicle. Such a cable clamping device is usually arranged near a motor terminal box, and fixed to a motor casing.

The cable clamping device 10 comprises a first part 14 and a second part 16, intended to be assembled together while clamping the cables 12 between them. Preferentially, the first part 14 forms an upper half bridle, and the second part 16 forms a lower half bridle.

The first part 14 comprises at least one first groove 18, and the second part 16 comprises at least one second groove 20, the first 18 and second 20 grooves forming together a passage for a respective cable 12, the passage extending along an axis X.

The first 14 and second 16 parts are on contact with each other, on complementary contact surfaces.

More particularly, the first part 14 comprises a first inclined contact surface 22, inclined with respect to the axis X, and the second part 16 comprises a second inclined contact surface 24, inclined with respect to the axis X, and complementary with the first inclined contact surface 22.

The inclined surfaces 22, 24 are also inclined with respect to a plane perpendicular to the axis X.

The first 14 and second 16 parts can be assembled in any relative position, as long as the first 22 and second 24 contact surface are on contact with each other.

In order to assemble the first 14 and second 16 parts, the first part 14 comprises at least one first opening 26 and the second part 16 comprises at least one second opening 28. The cable clamping device 10 comprises at least one fixation member 30, in particular a screw, each fixation member 30 passing through a respective first opening 26 and a respective second opening 28. For instance, the fixation member 30 is intended to be screwed into a complementary hole of the motor casing.

Preferentially, a support metal sheet 31 is inserted between a head of the fixation member 30 and the first part 14, forming a solid support for this head.

In order to allow the assemblage of the first 14 and second 16 parts in several relative positions, at least one of the first 26 and second 28 openings is oblong. Thus, the first opening 26 is facing the second opening 28 regardless of the relative position of the parts 14, 16.

Preferentially, each of the first openings 26 is oblong.

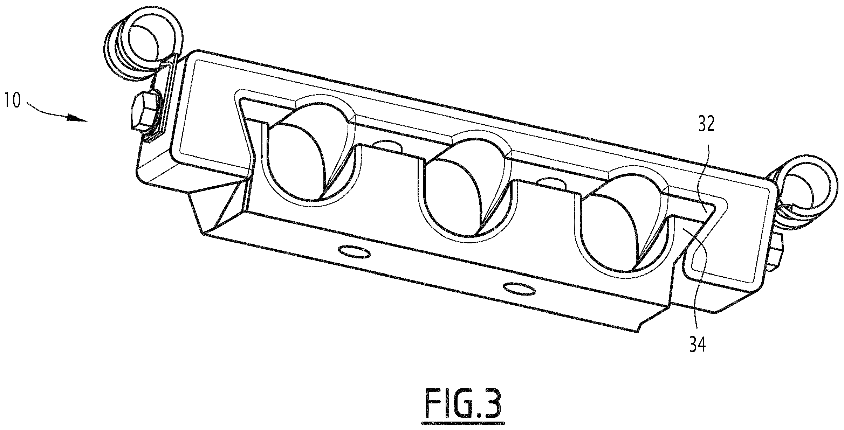

Preferentially, as shown on figure 3, the first part 14 comprises lateral recesses 32 for receiving lateral edges 34 of the second part 16, like a dovetail assembly. This allows the first part 14 and the second part 16 to slide with respect to each other in translation in a direction parallel to the inclined surfaces 22, 24.

Optionally, the first part 14 comprises holding members 36 for holding subsidiary cables like cables for measure devices or for any subsidiary device.

The cable clamping device 10 is assembled as follows.

In a first step, the cables 12 are disposed in the second grooves 20.

Then, the first part 14 accosts the second part 16, with the lateral edges 34 inserted in the lateral recesses 32.

The first part 14 thus can slide along the second part 16, until the first grooves 18 meet the cables 12. It appears that the relative position between the first 14 and second 16 parts depends on the diameter of the cables 12.

It should be noticed that the first 14 and second 16 parts stay on contact whatever the diameter of the cables 12 is.

Thus, there is no risk of rupture when the fixation member 30 are screwed.

As a result, the clamping device 10 of the invention can be used with cables of several size, so there is no need to have a large amount of type of clamping devices anymore.

## Claims

1. A cable clamping device (10) for clamping cables (12), for instance for electrical cables of an electrical motor, in particular in a railway vehicle, comprising a first part (14) and a second part (16) intended to be assembled together while clamping the cables (12) between them, wherein:
- the first part (14) comprises at least one first opening (26) and the second part (16) comprising at least one second opening (28), the cable clamping device (10) comprising at least one fixation member (30), each fixation member (30) passing through a respective first opening (26) and a respective second opening (28),
- the first part (14) comprises at least a first groove (18), and the second part (16) comprises at least a second groove (20), the first (18) and second (20) grooves forming together a passage for a respective cable (12), the passage extending along an axis (X), **characterized in that**:
- the first part (14) comprises a first inclined contact surface (22), inclined with respect to the axis (X), and the second part (16) comprises a second inclined contact surface (24), inclined with respect to the axis (X), and complementary with the first inclined contact surface (22),
- at least one of the first (26) and second (28) openings is oblong, so that the first (14) and second (16) parts can be assembled in several different positions while the first (22) and second (24) inclined contact surfaces are on contact with each other.

2. The cable clamping device (10) of claim 1, wherein each fixation member (30) is a screw.

3. The cable clamping device (10) of claim 2, wherein a support metal sheet (31) is inserted between a head of the fixation member (30) and the first part (14), forming a solid support for this head.

4. The cable clamping device (10) of any of preceding claims, wherein each of the first openings (26) is oblong.

5. The cable clamping device (10) of any of preceding claims, wherein the first part (14) comprises lateral recesses (32) for receiving lateral edges (34) of the second part (16).

6. The cable clamping device (10) of any of preceding claims, wherein the first part (14) comprises holding members (36) for holding subsidiary cables like cables for measure devices or for any subsidiary device.

7. Method of assembling a cable clamping device (10) according to any of preceding claims, comprising:
- disposing cables (12) in the second grooves (20),
- accosting the first part (14) with the second part (16),
- sliding the first part (14) along the second part (16), until the first grooves (18) meet the cables (12).

8. An electric motor, in particular for a railway vehicle, comprising a casing and cables (12), **characterized in that** it comprises the cable clamping device (10) of any of preceding claims, fastened on the casing.
